# EUROPÄISCHE PATENTSCHRIFT

(11) **EP 1 991 807 B1**
(45) Veröffentlichungstag und Bekanntmachung des Hinweises auf die Patenterteilung: **03.03.2010**
(21) Anmeldenummer: 07722817.9
(22) Anmeldetag: 14.02.2007
(51) Int. Cl.: F16L 37/248, F16L 37/367, F16L 37/56

(54) **MEHRFACH- KUPPLUNGSEINRICHTUNG**
MULTICOUPLING DEVICE
DISPOSITIF D'ACCOUPLEMENT À RACCORDS MULTIPLES

(30) Priorität: 06.03.2006 DE 102006010164
(43) Veröffentlichungstag der Anmeldung: 19.11.2008
(73) Patentinhaber: FESTO AG & Co. KG, 73734 Esslingen (DE)
(72) Erfinder: SCHULZ, Winfried, 73765 Neuhausen (DE); CLAUS, Hans-Jürgen, 70199 Stuttgart (DE); ZOLLER, Klaus, 70186 Stuttgart (DE); AMIRIDIS, Viola, 73734 Esslingen (DE); SCHERER, Monika, 79227 Schallstadt/Mengen (DE); WEISS, Martin, 73035 Göppingen (DE); BRENNER, Hans-Walter, 70565 Stuttgart (DE)
(74) Vertreter: Vogler, Bernd
(86) Internationale Anmeldenummer: PCT/EP2007/001266
(87) Internationale Veröffentlichungsnummer: WO 2007/101525

(56) Entgegenhaltungen:
- WO-A-2005/079698
- US-A- 2 399 525

## Beschreibung

Die Erfindung betrifft eine Mehrfach-Kupplungseinrichtung zur Herstellung einer lösbaren Verbindung zwischen ein fluidisches Druckmedium führender, einem Fluiddruckerzeuger zugeordneter erzeugerseitigen Fluidleitungen und wenigstens einem Fluidverbraucher zugeordneter verbraucherseitigen Fluidleitungen, entsprechend dem Oberbegriffens Anspruch 1 (US 2 399 525 A).

Eine Mehrfach-Kupplungseinrichtung ist aus der DE 1 923 186 bekannt, wobei hier ein erzeugseitiges erstes Kupplungsteil nach Art eines elektrischen Mehrpolsteckers vorgesehen ist, das auf ein zweites verbraucherseitiges Kupplungsteil in Form einer entsprechenden Steckdose aufsteckbar ist. Um ein Lösen bzw. Entkuppeln der beiden Kupplungsteile, insbesondere unter Fluidbeaufschlagung, voneinander zu verhindern, kann an einer Außenseite des ersten Kupplungsteils eine Blattfeder mit einer nach innen vorspringenden Nase vorgesehen sein, die beim Kuppeln in einer hierfür vorgesehene Ausnehmung am zweiten Kupplungsteil einrastet.

Das Kuppeln unter Druck stehender Fluidleitungen mittels einer Kupplungseinrichtung erfordert einen hohen Kraftaufwand, da gegen Fluiddruck gearbeitet werden muss. Bei der Mehrfach- bzw. Multipolkupplung multipliziert sich der Kraftaufwand um die Anzahl der angeschlossenen Fluidleitungen. Beispielsweise ist es bei dem vorstehend erwähnten Stand der Technik notwendig, das steckerartige erste Kupplungsteil gegen die mittels anstehendem Fluiddruck und Federkraft in Schließstellung gehaltenen Rückschlagventile aufzustecken. Ein Kupplungsvorgang per Hand ist deshalb bei derartigen Mehrfach-Kupplungseinrichtungen aufgrund des hohen Kraftaufwandes, der hier zu leisten ist, nur erschwert oder gar nicht möglich.

Aufgabe der Erfindung ist es, eine Mehrfach-Kupplungseinrichtung der eingangs erwähnten Art zu schaffen, bei der der Kupplungsvorgang mit relativ geringem Kraftaufwand von Hand durchführbar ist.

Diese Aufgabe wird durch eine Mehrfach-Kupplungseinrichtung mit den Merkmalen des unabhängigen Anspruchs 1 gelöst. Weiterbildungen der Erfindung sind in den Unteransprüchen dargestellt.

Die erfindungsgemäße Mehrfach-Kupplungseinrichtung zeichnet sich dadurch aus, dass zwischen den beiden Kupplungsteilen wenigstens ein von Hand betätigbares Schieberelement vorgesehen ist, das in einer quer zur Installationsachse verlaufenden Betätigungsebene zwischen einer ein Kuppeln bzw. Entkuppeln der beiden Kupplungsteile ermöglichenden Kupplungs-/Entkupplungsstellung und einer der Arbeitsstellung der beiden Kupplungsteile zugeordneten Sicherungsstellung bewegbar ist.

Durch das in der quer zur Installationsachse verlaufenden Betätigungsebene bewegbare Schieberelement ist der Kupplungsvorgang ohne großen Kraftaufwand per Hand möglich. Im Regelfall verläuft die Strömungsrichtung des durch die Kupplungseinrichtung strömenden Fluids parallel zur Installationsachse der beiden Kupplungsteile, wodurch der Kupplungsvorgang, bei dem die Kupplungsteile in Richtung der Installationsachse einander angenähert werden, durch den Fluiddruck behindert wird. Die Betätigung des Schieberelements erfolgt jedoch bei einer derartigen Strömungsführung quer zur Strömungsrichtung des Fluides, so dass also nicht gegen den Fluiddruck gearbeitet werden muss. Zweckmäßigerweise befindet sich das Schieberelement zunächst in seiner Kupplungs-/Entkupplungsstellung, in der die beiden Kupplungsteile miteinander gekuppelt werden können, wobei gleichzeitig der Fluiddurchgang durch das dem Schieberelement zugeordnete Kupplungsteil gesperrt ist. Am korrespondierenden zweiten Kupplungsteil können die zugehörigen Fluidleitungen entweder drucklos bzw. entlüftet sein oder mittels Rückschlagventilen gesichert sein, damit das einander annähern der Kupplungsteile durch ausströmendes Fluid nicht behindert wird. Alternativ ist es möglich, jedem Kupplungsteil ein separates Schieberelement zuzuordnen, wobei die beiden Schieberelemente mechanisch miteinander gekoppelt sein können, so das sie gemeinsam zwischen ihrer jeweiligen Kupplungs-/Entkupplungsstellung und ihrer jeweiligen Endstellung bewegbar sind. Bei dieser Variante ist also eine doppelseitige Absperrung vorhanden.

Schieberelement und Haltemittel sind derart ausgebildet und wirken derart zusammen, dass bei der Bewegung des Schieberelements in seine Kupplungs-/Entkupplungsstellung der Fluiddurchgang durch die beiden Kupplungsteile zumindest teilweise verschließbar ist, wobei gleichzeitig die beiden Kupplungsteile vor Erreichen der Kupplungs-/Entkupplungsstellung unlösbar miteinander verbunden sind. Es ist also möglich, den Fluiddurchgang mittels des Schieberelementes teilweise oder ganz zu verschließen, ohne das es zu einem sogenannten Rückschlageffekt kommt, bei dem die beiden Kupplungsteile durch den nun am Schieberelement anstehenden Fluiddruck schlagartig voneinander weggedrückt werden. Bei der vorstehend erwähnten ersten Variante ist es nunmehr notwendig, die hinter einem der beiden Kupplungsteile liegenden Fluidleitungen zu entlüften, bevor das Schieberelement seine Kupplungs-/Entkupplungsstellung erreicht. Bei der vorstehend erwähnten zweiten Variante ist eine doppelseitige Absperrung mittels den beiden Schieberelementen gegeben, so dass die Schieberelemente hier ohne Weiteres in ihre Kupplungs-/Entkupplungsstellung bewegt werden können.

Bei einer Weiterbildung der Erfindung sind die ersten und zweiten Fluidanschlüsse am ersten und zweiten Kupplungsteil als das jeweilige Kupplungsteil durchsetzende Fluidkanäle ausgebildet, wobei das Schiebeelement Durchgangsöffnungen besitzt, die in der Sicherungsstellung des Schieberelements derart mit den Fluidkanälen zusammengeschaltet sind, dass Strömungsbrücken zwischen den ersten und zweiten Fluidkanälen gebildet sind. Zweckmäßigerweise erstrecken sich die ersten und zweiten Fluidkanäle im Wesentlichen parallel zur Installationsachse zwischen Ober- und Unterseite des jeweiligen Kupplungsteils, wobei in der Endstellung des Schieberelements ein jeweiliger erster Fluidkanal am ersten Kupplungsteil im Wesentlichen fluchtend zur zugeordneten Durchgangsöffnung am Schieberelement und im Wesentlichen fluchtend zum zugeordneten zweiten Fluidkanal am zweiten Kupplungsteil ausgerichtet ist. Das Schieberelement kann also nach Art einer Blende wirken, wobei die im Wesentlichen fluchtend zueinander ausgerichteten ersten und zweiten Fluidkanäle durch Verlagern der Durchgangsöffnungen in Bezug auf die ersten und zweiten Fluidkanäle teilweise oder ganz verschlossen werden.

Das wenigstens eine Schieberelement ist als insbesondere kreisrunde Stellscheibe ausgebildet, die zwischen den beiden Kupplungsteilen angeordnet und mittels einer Drehbewegung mit der Installationsachse als Drehachse zwischen der Kupplungs-/Entkupplungsstellung und der Sicherungsstellung verdrehbar ist. Die Stellscheibe ist also platzsparend zwischen den beiden Kupplungsteilen untergebracht. Bei der Verdrehung der Stellscheibe werden also weder die Kupplungsteile in axialer Richtung parallel zur Installationsachse aufeinanderzu- oder voneinanderwegbewegt noch verlässt die Stellscheibe den Bereich zwischen den beiden Kupplungsteilen.

Alternativ ist es möglich, das Schieberelement als Stellschieber auszubilden, der linear zwischen der Kupplungs/Entkupplungsstellung und der Endstellung verschiebbar ist. An einem derartigen Stellschieber kann beispielsweise wenigstens eine Lochreihe mit Durchgangsöffnungen vorgesehen sein, die in der Sicherungsstellung mit den ersten und zweiten Fluidkanälen an den beiden Kupplungsteilen fluchten, so dass ein Fluiddurchgang durch die Kupplungseinrichtung gebildet ist.

Wie bereits vorstehend erwähnt, besitzt die Mehrfach-Kupplungseinrichtung Haltemittel, die verhindern, dass sich die beiden Kupplungsteile Entkuppeln und darüber hinaus verhindert, dass die beiden Kupplungsteile durch Fluiddruck schlagartig voneinander getrennt werden. Als Haltemittel ist ein an einem der Kupplungsteile oder an der Stellscheibe ausgebildeter, koaxial zur Drehachse ausgerichteter Vorsprung und eine am Schieberelement oder an einem der Kupplungsteile ausgebildete Ausnehmung vorgesehen, wobei Vorsprung und Ausnehmung in der Kupplungs-/Entkupplungsstellung der Stellscheibe zusammensteckbar sind, während in einer mittels Drehbewegung der Stellscheibe erreichbaren anderen Stellung der Stellscheibe eine unlösbare Verbindung zwischen den beiden Kupplungsteilen gebildet ist. Die beiden Kupplungsteile können also zunächst zusammengesteckt und dann mittels Drehbewegung gesichert werden, mithin kann eine Art Steck-DrehVerbindung vorliegen.

In besonders bevorzugter Weise ist die Ausnehmung schlüssellochartig ausgebildet, wobei der Vorsprung korrespondierend hierzu einen schlüsselartigen Profilabschnitt aufweist, an den sich in Aufsteckrichtung ein zylindrischer Drehabschnitt anschließt, wobei sich die Ausnehmung im zusammengesteckten Zustand von Stellscheibe und zugeordnetem Kupplungsteil im Bereich des zylindrischen Drehabschnitts befindet. Dadurch ist eine Verdrehung der Stellscheibe gegenüber dem Kupplungsteil möglich. Das Zusammenwirken von schlüssellochartiger Ausnehmung und schlüsselartigem Profilabschnitt sowie zylindrischem Drehabschnitt kann nach Art eines Bajonettverschlusses erfolgen.

Um eine Begrenzung der Drehbewegung der Stellscheibe gegenüber den Kupplungsteilen zu erreichen und die Kupplungs-/Entkupplungsstellung sowie die Sicherungsstellung der Stellscheibe vorzugeben, kann eine Drehbegrenzungseinrichtung vorgesehen sein. Die Drehbegrenzungseinrichtung kann wenigstens einen an der Stellscheibe oder an einem der beiden Kupplungsteile ausgebildeten langlochartigen Führungsschlitz und wenigstens einen in den Führungsschlitz eintauchenden, an einem der beiden Kupplungsteile oder an der Stellscheibe ausgebildeten Führungsbolzen aufweisen, wobei die beiden Enden des Führungsschlitzes als Anschläge für den Führungsbolzen dienen. Zweckmäßigerweise sind mehrere Führungsschlitze über den Umfang der Stellscheibe verteilt angeordnet.

Damit bei der Verdrehung der Stellscheibe in die Kupplungs-/Entkupplungsstellung und dem damit verbundenen Verschließen des Fluiddurchgangs, die Stellscheibe ihrerseits nicht mittels anstehendem Fluiddruck schlagartig vom zugeordneten Kupplungsteil weggedrückt wird, kann eine Verbindungseinrichtung zur Verbindung von Stellscheibe und zugeordnetem Kupplungsteil vorgesehen sein. zweckmäßigerweise ist bei der Variante mit nur einer einzigen Stellscheibe diese mit demjenigen Kupplungsteil gekuppelt, das nicht den zu den Haltemitteln gehörenden Vorsprung aufweist.

Die Verbindungseinrichtung kann eine an der Stellscheibe ausgebildete zylindrische Verbindungshülse und eine am Kupplungsteil ausgebildete zylindrische Hülsenaufnahme aufweisen, in der die Verbindungshülse drehbar gelagert ist, wobei die Verbindungshülse über Sicherungsmittel lösbar mit dem Kupplungsteil verbunden ist. Diese Anordnung ermöglicht, dass die Stellscheibe auch gegenüber diesem Kupplungsteil verdreht werden kann und dennoch an diesem gesichert ist. Als Sicherungsmittel kann beispielsweise eine an der Verbindungshülse vorgesehene Ringnut und ein in die Ringnut einlegbarer Sicherungsring vorgesehen sein. Als Sicherungsring kann beispielsweise ein Sprengring verwendet werden.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung eines ersten Ausführungsbeispiels der erfindungsgemäßen MehrfachKupplungseinrichtung,
- Figur 2: eine perspektivische Darstellung des zweiten Kupplungsteils der Kupplungseinrichtung von Figur 1,
- Figur 3: das zweite Kupplungsteil von Figur 2 in Seitenansicht,
- Figur 4: eine Draufsicht auf das als Stellscheibe ausgebildete Schieberelement der Kupplungseinrichtung von Figur 1,
- Figur 5: die Stellscheibe von Figur 4 in Seitenansicht,
- Figur 6: eine Draufsicht auf das erste Kupplungsteil der Kupplungseinrichtung von Figur 1,
- Figur 7: das erste Kupplungsteil von Figur 6 in Seitenansicht,
- Figur 8: eine perspektivische Darstellung eines zweiten Ausführungsbeispiels der erfindungsgemäßen MehrfachKupplungseinrichtung, wobei zwei als Stellscheiben ausgebildete Schieberelemente vorgesehen sind, und
- Figur 9: eine perspektivische Darstellung auf das zweite Kupplungsteil samt zugeordneter Stellscheibe der Kupplungseinrichtung von Figur 8.

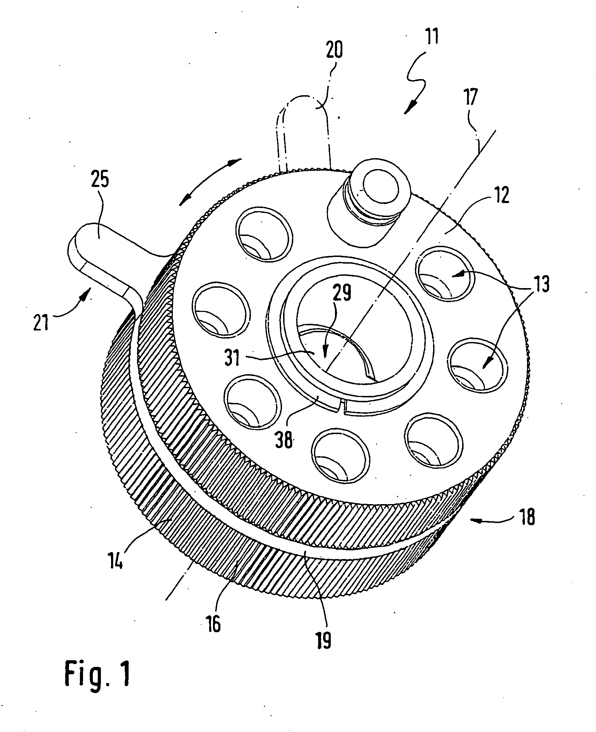

Die Figuren 1 bis 7 zeigen ein erstes Ausführungsbeispiel der erfindungsgemäßen Mehrfach-Kupplungseinrichtung 11, die auch als Multipolkupplung bezeichnet werden könnte. Der Einfachheit halber wird die Mehrfach-Kupplungseinrichtung im Folgenden als Kupplungseinrichtung 11 bezeichnet. Solche Kupplungseinrichtungen 11 dienen zur Herstellung einer lösbaren Verbindung zwischen einem Fluiddruckerzeuger zugeordneter erzeugerseitigen Fluidleitungen (nicht dargestellt) und wenigstens einem Fluidverbraucher zugeordneter verbraucherseitigen Fluidleitungen (nicht dargestellt). Als fluidisches Druckmedium ist insbesondere Druckluft vorgesehen. Als Fluiddruckerzeuger kann beispielsweise ein Druckluftkompressor dienen.

Die Kupplungseinrichtung 11 besitzt ein erzeugerseitiges erstes Kupplungsteil 12 - im Folgenden erstes Kupplungsteil 12. genannt -, das mehrere erste Fluidanschlüsse 13 zum Anschließen der erzeugerseitigen Fluidleitungen aufweist. Ferner ist ein verbraucherseitiges zweites Kupplungsteil 14 - im Folgenden zweites Kupplungsteil 14 genannt - vorgesehen, das mehrere zweite Fluidanschlüsse 15 zum Anschließen der verbraucherseitigen Fluidleitungen besitzt.

Das in den Figuren 1 bis 7 beispielhaft dargestellte erste Ausführungsbeispiel der Kupplungseinrichtung 11 besitzt ein erstes Kupplungsteil 12 zylindrischer Gestalt, das mehrere ringförmig angeordnete erste Fluidanschlüsse in Form von Fluidkanälen 13, insbesondere zylindrischer Ausgestaltung aufweist. Der Durchmesser des ersten Kupplungsteils 12 ist hierbei bevorzugt größer als dessen Höhe. Die Fluidkanäle 13 durchsetzen das zylindrische erste Kupplungsteile 12 von seiner Oberseite bis zu seiner Unterseite. Die Mantelfläche des ersten Kupplungsteils ist der besseren Greifbarkeit wegen mit einer rändelartigen Profilierung 16 versehen.

Das zweite Kupplungsteil 14 besitzt ebenfalls zylindrische Gestalt, insbesondere mit identischen Abmessungen im Vergleich zum ersten Kupplungsteil 13, den Durchmesser und die Höhe betreffend. Es sind ringförmig angeordnete zweite Fluidanschlüsse in Form von Fluidkanälen 15 vorgesehen.

Die beiden Kupplungsteile 12, 14 werden beim Kupplungsvorgang durch gegenseitige Annäherung aneinander in Richtung einer Installationsachse 17 in eine Arbeitsstellung 18 überführt, in der Fluiddurchgang durch die beiden Kupplungsteile 12, 14 gebildet ist und in der die beiden Kupplungsteile 12, 14 mittels Haltemitteln gegen Entkuppeln gesichert sind. Das Kuppeln unter Druck stehender Fluidleitungen erfordert bei einer Multipolkupplung einen hohen Kraftaufwand. Um das Kuppeln dennoch von Hand durchführen zu können, ist zwischen den beiden Kupplungsteilen 12, 14 wenigstens ein von Hand betätigbares Schieberelement 19 vorgesehen, dass in einer quer zur Installationsachse 17 verlaufenden Betätigungsebene zwischen einer ein Kuppeln bzw. Entkuppeln der beiden Kupplungsteile 12, 14 ermöglichenden Kupplungs-/Entkupplungsstellung 20 und einer der Arbeitsstellung 18 der beiden Kupplungsteile zugeordneten Sicherungsstellung 21 bewegbar ist. Unter Fluiddruck wird also nicht parallel zur Installationsachse, also mithin gegen die Strömungsrichtung gekuppelt, sondern in einer Betätigungsebene quer zur Installationsachse. Der dabei zu leistende Kraftaufwand ist dadurch erheblich reduziert.

Als Schieberelement ist gemäß dem ersten Ausführungsbeispiel eine insbesondere kreisrunde Stellscheibe 19 vorgesehen, die auch als Verriegelungs- oder Absperrscheibe bezeichnet werden könnte. Wie insbesondere in Figur 1 dargestellt, befindet sich die Stellscheibe 19 zwischen dem ersten und dem zweiten Kupplungsteil 12, 14. Zweckmäßigerweise entspricht der Durchmesser der Stellscheibe 19 den Durchmessern des ersten bzw. zweiten Kupplungsteils 12, 14. Die Stellscheibe 19 ist mittels einer Drehbewegung mit der Installationsachse 17 als Drehachse zwischen der Kupplungs-/Entkupplungsstellung 20 und der Sicherungsstellung 21 verdrehbar.

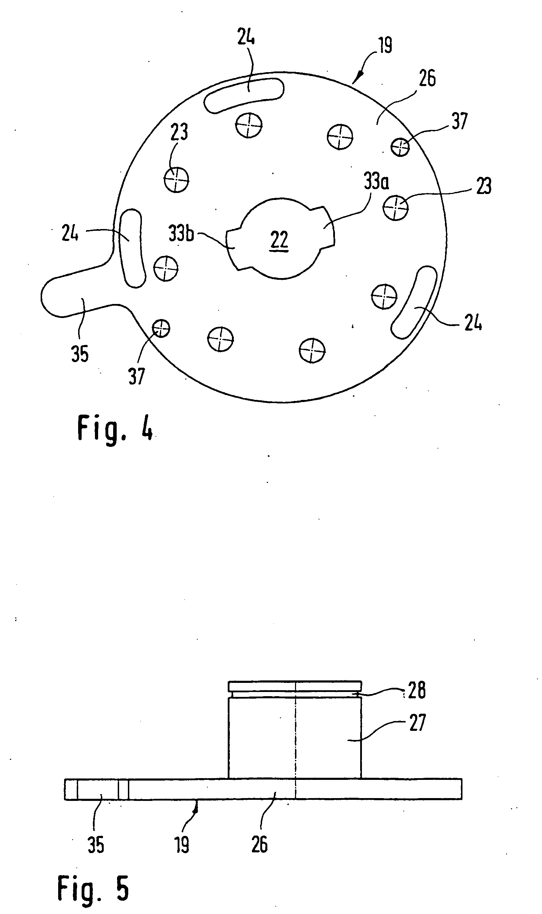

Wie insbesondere in Figur 4 dargestellt besitzt die Stellscheibe 19 eine zentrale schlüssellochartige Ausnehmung 22, die Bestandteil der nachfolgend näher beschriebenen Haltemittel ist. Ferner befinden sich an der Stellscheibe 19 ringförmig angeordnete, vorzugsweise kreisrund ausgestaltete Durchgangsöffnungen 23, die bei dementsprechender Ausrichtung der Stellscheibe in ihrer Sicherungsstellung 21 fluchtend zu den ersten und zweiten Fluidkanälen 13, 15 des ersten und zweiten Kupplungsteils 12, 14 anordenbar sind, womit ein Fluiddurchgang durch die Kupplungseinrichtung 11 entsteht. Ferner sind noch in der Nähe des Scheibenrands Führungsschlitze 24 vorgesehen, die nach Art eines Langloches ausgestaltet sind. Die Führungsschlitze 24 sind Bestandteil der nachfolgend näher beschriebenen Drehbegrenzungseinrichtung 25. Es sind hier beispielhaft (Figur 4) drei Führungsschlitze vorgesehen, die über den Umfang der Stellscheibe 19 verteilt angeordnet sind. Um die Stellscheibe gegenüber den Kupplungsteilen 12, 14 verdrehen zu können, besitzt diese einen Griff 25, der hier beispielhaft als einstückig mit der Mantelfläche der Stellscheibe verbundene, nach außen vorspringende Nase dargestellt ist.

Wie in Figur 5 dargestellt, besitzt die Stellscheibe 19 eine einstückig an den kreisrunden Basiskörper 26 der Stellscheibe 19 angesetzte zylindrische Verbindungshülse 27, die Bestandteil der nachfolgend näher beschriebenen Verbindungseinrichtung zur Verbindung der Stellscheibe 19 mit dem ihr zugeordneten Kupplungsteil 12 ist. Die Verbindungshülse 27 ist mittig angeordnet und liegt somit koaxial zur Installationsachse 17. Die Höhe der Verbindungshülse 27 ist größer als die Dicke der Stellscheibe 19 und mithin größer als die Höhe des zugeordneten Kupplungsteils 12, so dass der obere Bereich der Verbindungshülse 27 über das Kupplungsteil 12 hinaussteht. An diesem oberen Bereich befindet sich eine Ringnut 28, als Teil der Sicherungsmittel zur Verbindung von Stellscheibe 19 und zugeordnetem Kupplungsteil 12.

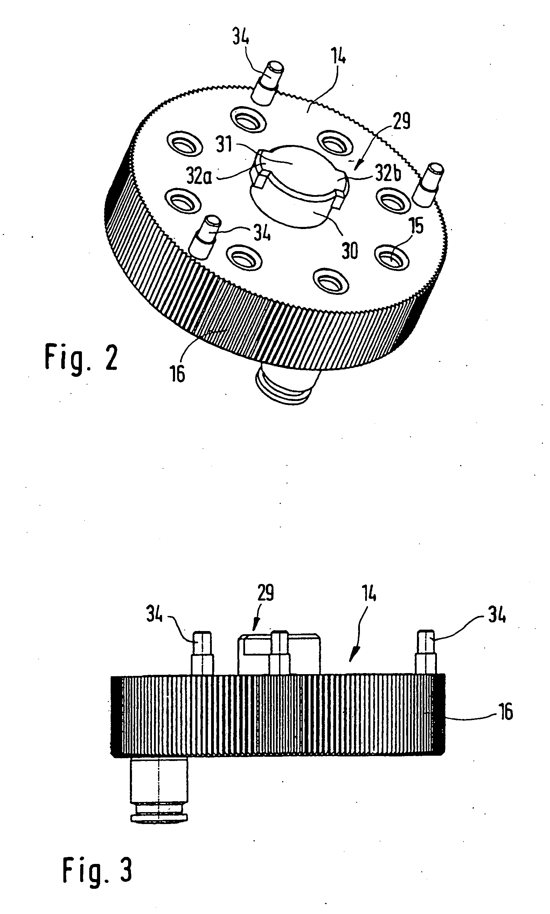

Die Figuren 2 und 3 zeigen das bereits vorstehend erwähnte zweite Kupplungsteil 14, das den anderen Teil der Haltemittel, nämlich einen mittig angeordneten, und somit koaxial zur Installationsachse 17 liegenden Vorsprung 29 aufweist. Der Vorsprung 29 besitzt einen zylindrischen Drehabschnitt 30, der einenends einstückig mit dem Kupplungsteil 14 und andernends mit einem schlüsselartigen Profilabschnitt 31 verbunden ist. Die Form der schlüsselartigen Profilierung des Profilabschnitts 31 ist an die Form der schlüsselartigen Ausnehmung 22 der Stellscheibe 19 angepasst. Hierzu besitzt der schlüsselartige Profilabschnitt 31 von seiner Mantelfläche nach außen vorspringende diametral zueinander angeordnete Nasen 32a, 32b, die eine Entsprechung in den nasenartigen Ausbuchtungen 33a, 33b der schlüsselartigen Ausnehmung 22 an der Stellscheibe 19 haben. Bei fluchtender Ausrichtung der nasenartigen Ausbuchtungen 33a, 33b zu den Nasen 32a, 32b am Profilabschnitt 31 lassen sich Stellscheibe 19 und Kupplungsteil 14 zusammenstecken. Die Stellscheibe 19 gelangt dann beim Aufstecken in die in Aufsteckrichtung hinter dem Profilabschnitt 31 liegenden Drehabschnitt 30, wodurch eine Verdrehung der Stellscheibe gegenüber dem Kupplungsteil 14 möglich ist.

Am zweiten Kupplungsteil 14 befindet sich ferner noch der andere Teil der Drehbegrenzungseinrichtung, nämlich Führungsbolzen 34, die von der Oberseite des zweiten Kupplungsteils 14 nach oben abstehen und in die zugeordneten Führungsschlitze 24 an der Stellscheibe 19 eintauchen können.

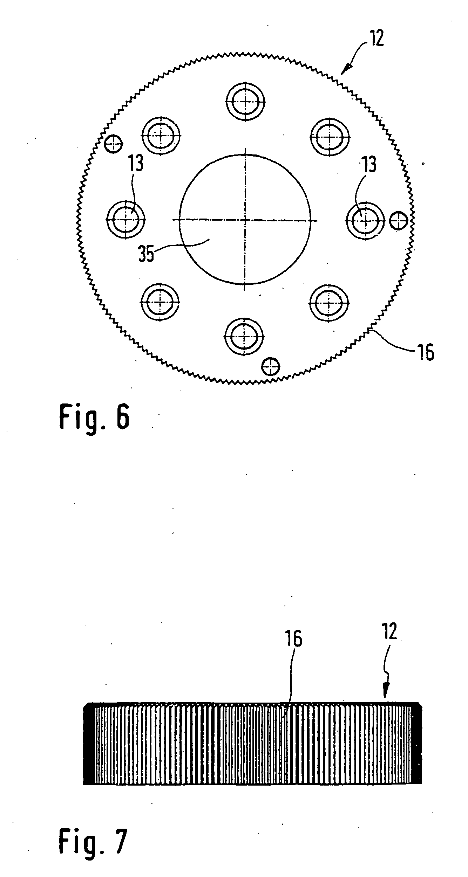

In den Figuren 6 und 7 ist das erste Kupplungsteil 12 dargestellt, das mit der Stellscheibe 19 über die Verbindungseinrichtung verbunden wird. Hierzu weist die das erste Kupplungsteil 12 eine mittig angeordnet zylindrische Hülsenaufnahme 35 auf, in der die Verbindungshülse 27 drehbar gelagert ist. Wie in Figur 1 dargestellt steht der obere Teil der Verbindungshülse 27 über die Oberseite des ersten Kupplungsteils 12 hinaus, wobei die an der Verbindungshülse 27 ausgebildete Ringnut 28 im Wesentlichen mit der Oberseite des Kupplungsteils abschließt, wodurch ein in die Ringnut 28 eingelegter Sicherungsring 38, beispielsweise in Form eines Sprengrings, die Verbindungshülse 27 am ersten Kupplungsteils 12 sichert.

Beim Kupplungsvorgang des in den Figuren 1 bis 7 dargestellten ersten Ausführungsbeispiels der Kupplungseinrichtung 11 ist zunächst dafür gesorgt, dass an der Kupplungsseite des zweiten Kupplungsteils kein Fluid aus den zweiten Fluidkanälen 15 austritt, was die Annäherung der beiden Kupplungsteile 12, 14 behindern würde. Dies kann dadurch erfolgen, dass die an das zweite Kupplungsteil angeschlossenen Fluidleitungen entlüftet werden oder die Rückströmung an Fluid mittels Rückschlagventilen verhindert wird. Die Stellscheibe 19 und das erste Kupplungsteil sind über die Verbindungseinrichtung miteinander verbunden, wobei die Stellscheibe in ihrer Kupplungs-/Entkupplungsstellung 20 ist, in der die ersten Fluidkanäle durch die Stellscheibe verschlossen sind. Die Stellscheibe 19 wirkt hier also als einseitiges Absperrelement. Dadurch kann der am ersten Kupplungsteil anstehende Fluiddruck beibehalten werden. Als nächstes werden nun zweites Kupplungsteil 14 einerseits und Stellscheibe 19 samt erstes Kupplungsteil 12 andererseits derart zueinander ausgerichtet, dass die nasenartigen Ausbuchtungen 33a, 33b an der schlüssellochartigen Ausnehmung 22 an der Stellscheibe 19 fluchtend zu den Nasen 32a, 32b des schlüsselartigen Profilabschnitts am Vorsprung 29 des zweiten Kupplungsteils 14 ausgerichtet sind. In dieser Ausrichtung lassen sich zweites Kupplungsteil 14 und Stellscheibe 19 samt erstes Kupplungsteil 12 zusammenstecken. Beim Aufstecken gelangt die Stellscheibe nunmehr in den Bereich des zylindrischen Drehabschnitts 30 am Vorsprung, wodurch eine Verdrehung der Stellscheibe gegenüber den beiden Kupplungsteilen 12, 14 ermöglicht ist. Gleichzeitig tauchen beim Aufstecken der beiden Kupplungsteile 12, 14 die am zweiten Kupplungsteil angeordneten Führungsbolzen 34 in die zugeordneten Führungsschlitze 24 an der Stellscheibe 19 ein. Dabei schlagen die Enden der Führungsschlitze an die Führungsbolzen an, so dass eine Verdrehung der Stellscheibe lediglich in eine bestimmte Richtung, nämlich in Richtung zum anderen Ende der Führungsschlitze 24 hin möglich ist. Die Stellscheibe 19 befindet sich also in ihrer Kupplungs-/Entkupplungsstellung 20 und wird dann durch Handhabe am Griff 25 insbesondere in Gegen-Uhrzeigerrichtung gegenüber den beiden Kupplungsteilen 12, 14 verdreht. Dabei sind die nasenartigen Ausbuchtungen 33a, 33b der schlüssellochartigen Ausnehmung 22 an der Stellscheibe 19 und die Nasen 32a, 32b am Profilabschnitt des Vorsprungs nicht mehr fluchtend zueinander ausgerichtet; das heißt die Nasen 32a, 32b am schlüsselartigen Profilabschnitt blockieren ein Abziehen der Stellscheibe samt erstem Kupplungsteil 12 entgegen der Aufsteckrichtung vom zweiten Kupplungsteil 14. Die beiden Kupplungsteile 12, 14 sind nunmehr gesichert. Durch Weiterdrehen der Stellscheibe 19 entgegen der Uhrzeigerrichtung werden nunmehr schließlich die Durchgangsöffnungen 23 fluchtend zu den ersten und zweiten Fluidkanälen 13, 15 am ersten bzw. zweiten Kupplungsteils 12, 14 ausgerichtet, so das ein Fluiddurchgang durch die Kupplungseinrichtung 11 geschaffen wird. Diese Stellung wird insbesondere durch das andere Ende der jeweiligen Führungsschlitze vorgegeben, das dann mit den zugeordneten Führungsbolzen 34 wiederum einen Drehanschlag bildet.

Der Entkopplungsvorgang erfolgt in umgekehrter Weise. Das heißt zunächst befindet sich die Stellscheibe 19 in ihrer Sicherungsstellung 21, in der die Durchgangsöffnungen 23 der Stellscheibe 19 fluchtend zu den ersten und zweiten Fluidkanälen 13, 15 ausgerichtet sind. Durch Verdrehen der Stellscheibe 19, insbesondere in Uhrzeigerrichtung werden nun die ersten und zweiten Fluidkanäle verschlossen. Hierbei tritt ein sogenannter Rückschlageffekt auf, das heißt anstehender Fluiddruck steht zunächst nun beidseits an der Stellscheibe 19 an, wodurch die beiden Kupplungsteile 12, 14 bestrebt sind, sich schlagartig voneinander zu lösen. Ein derartiger Effekt wird jedoch durch die Haltemittel und zwar durch den schlüsselartigen Profilabschnitt 31 am zweiten Kupplungsteil und die schlüssellochartige Ausnehmung 22 an der Stellscheibe verhindert, da die nasenartigen Ausbuchtungen 33a, 33b und die Nasen 32a, 32b noch nicht fluchtend zueinander ausgerichtet sind und somit eine Trennung der beiden Kupplungsteile 12, 14 nicht möglich ist. Als nächstes muss nun dafür gesorgt werden, dass am zweiten Kupplungsteil 14 kein Fluiddruck mehr ansteht. Erst dann kann die Stellscheibe weiter in ihre Kupplungs-/Entkupplungsstellung 20 gedreht werden, so dass das zweite Kupplungsteil von der Stellscheibe 19 samt dem ersten Kupplungsteil 12 getrennt werden kann.

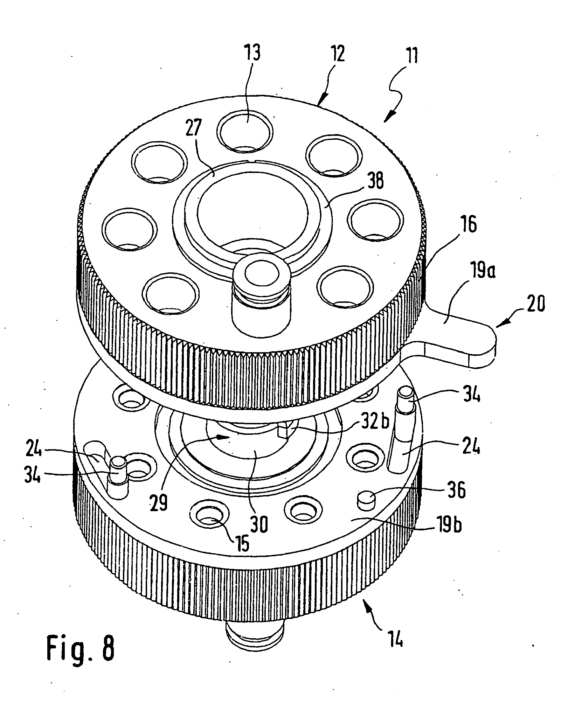

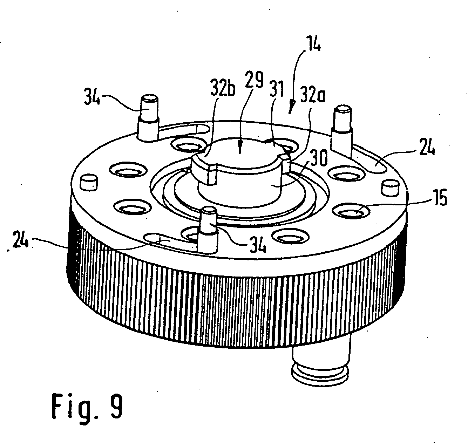

In den Figuren 8 und 9 ist ein zweites Ausführungsbeispiel der erfindungsgemäßen Kupplungseinrichtung 11 dargestellt, das sich vom ersten Ausführungsbeispiel dadurch unterscheidet, dass zwei Stellscheiben 19a, 19b vorgesehen sind, von denen eine erste Stellscheibe 19a in identischer Weise zum ersten Ausführungsbeispiel mit dem ersten Kupplungsteil 12 verbunden ist, während die zweite Stellscheibe 19b dem zweiten Kupplungsteil 14 zugeordnet ist.

Die zweite Stellscheibe 19b besitzt im Gegensatz zur ersten Stellscheibe keinen Griff, da sie mechanisch mit der ersten Stellscheibe 19a verbunden ist, beispielsweise mittels Verbindungsbolzen 36, die von der Oberseite der zweiten Stellscheibe 19b nach oben abragen und in hierfür vorgesehene Ausnehmungen 37 an der ersten Stellscheibe 19a (Figur 4) eintauchen. Ferner besitzt die zweite Stellscheibe 19b keine Verbindungshülse, sie ist jedoch drehbar am zweiten Kupplungsteil 14 gelagert und dabei gegen Lösen, insbesondere bei am zweiten Kupplungsteil anstehendem Fluiddruck, gesichert.

Der Kupplungsvorgang des zweiten Ausführungsbeispiels unterscheidet sich vom Kupplungsvorgang des ersten Ausführungsbeispiels dadurch, dass hier eine doppelseitige Absperrung durch die beiden Stellscheiben 19a, 19b vorliegt, so dass sowohl am ersten Kupplungsteil 12 als auch am zweiten Kupplungsteil 14 anstehender Fluiddruck beibehalten werden kann. Ansonsten erfolgt das Kuppeln in identischer Weise zum ersten Ausführungsbeispiel.

Auch beim Entkopplungsvorgang muss in Folge der doppelseitigen Absperrung nicht darauf geachtet werden, vor dem Verdrehen der Stellscheibe in die Kupplungs-/Entkupplungsstellung eines der beiden Kupplungsteile drucklos zu "schalten", sondern hier kann ohne weiteres in die Kupplungs-/Entkupplungsstellung 20 gedreht werden.

## Patentansprüche

1. Mehrfach-Kupplungseinrichtung zur Herstellung einer lösbaren Verbindung zwischen ein fluidisches Druckmedium führender, einem Fluiddruckerzeuger zugeordneter erzeugerseitigen Fluidleitungen und wenigstens einem Fluidverbraucher zugeordneter verbraucherseitigen Fluidleitungen, mit einem ersten Kupplungsteil (12), das mehrere erste Fluidanschlüsse (13) für die erzeugerseitigen Fluidleitungen aufweist, und mit einem zweiten Kupplungsteil (14), das mehrere zweite Fluidaschlüsse (15) für die verbraucherseitigen Fluidleitungen besitzt, wobei die beiden Kupplungsteile (12, 14) beim Kupplungsvorgang durch gegenseitige Annnäherung aneinander in Richtung einer Installationsachse (17) in eine Arbeitsstellung (18) überführbar sind, in der ein Fluiddurchgang durch die beiden Kupplungsteile (12, 14) gebildet ist, und in der die beiden Kupplungsteile (12, 14) mittels Haltemitteln (22, 29) gegen Entkuppeln gesichert sind, wobei zwischen den beiden Kupplungsteilen (12, 14) wenigstens eine von Hand betätigbare Stellscheibe (19; 19a, 19b) vorgesehen ist, die in einer quer zu Installationsachse (17) verlaufenden Betätigungsebene zwischen einer ein Kuppeln bzw. Entkuppeln der beiden Kupplungsteile (12, 14) ermöglichenden Kupplungs/Entkupplungsstellung (20) und einer der Arbeitsstellung (18) der beiden Kupplungsteile (12, 14) zugeordneten Sicherungsstellung (21) mittels einer Drehbewegung mit der Installationsachse (17) als Drehachse verdrehbar ist, wobei bei der Drehbewegung der Stellscheibe (19; 19a, 19b) in ihre Kupplungs-/Entkupplungsstellung (20) der Fluiddurchgang durch die beiden Kupplungsteile (12, 14) mittels der Stellscheibe (19; 19a, 19b) zumindest teilweise verschließbar ist und gleichzeitig die beiden Kupplungsteile (12, 14) vor Erreichen der Kupplungs-/Entkupplungsstellung der Stellscheibe (19; 19a, 19b) unlösbar miteinander verbunden sind, **dadurch gekennzeichnet, dass** als Haltemittel ein an einem der Kupplungsteile (12, 14) oder an der Stellscheibe (19, 19a) ausgebildeter, koaxial zur Drehachse ausgerichteter Vorsprung (29) und eine an der Stellscheibe (19; 19a) oder an einem der Kupplungsteile (12, 14) ausgebildete Ausnehmung (22) vorgesehen ist, wobei Vorsprung (29) und Ausnehmung (22) in der Kupplungs-/Entkupplungsstellung (20) der Stellscheibe (19, 19a) zusammensteckbar sind, während in einer mittels Drehbewegung der Stellscheibe (19; 19a) erreichbaren anderen Stellung der Stellscheibe (19; 19a) eine unlösbare Verbindung zwischen den beiden Kupplungsteilen (12, 14) gebildet ist.

2. Kupplungseinrichtung nach Anspruch 1, **dadurch gekennzeichnet**, das die ersten und zweiten Fluidanschlüsse am ersten und zweiten Kupplungsteil (12, 14) als das jeweilige Kupplungsteil (12, 14) durchsetzende Fluidkanäle (13, 15) ausgebildet sind, und dass die Stellscheibe (19; 19a, 19b) Durchgangsöffnungen (23) besitzt, die in der Sicherungsstellung (21) der Stellscheibe (19; 19a, 19b) derart mit den Fluidkanälen (13, 15) zusammengeschaltet sind, dass Strömungsbrücken zwischen den ersten und zweiten Fluidkanälen (13, 15) gebildet sind.

3. Kupplungseinrichtung nach Anspruch 2, **dadurch gekennzeichnet, dass** sich die ersten und zweiten Fluidkanäle (13, 15) im wesentlichen parallel zur Installationsachse (17) zwischen der Ober- und Unterseite des jeweiligen Kupplungsteils (12, 14) erstrecken, wobei in der Sicherungsstellung (21) der Stellscheibe (19; 19a, 19b) ein jeweiliger ersten Fluidkanal (13) am ersten Kupplungsteil (12) im Wesentlichen fluchtend zur zugeordneten Durchgangsöffnung (23) an der Stellscheibe (19; 19a, 19b) und im Wesentlichen fluchtend zum zugeordneten zweiten Fluidkanal (15) am zweiten Kupplungsteil (14) ausgerichtet ist.

4. Kupplungseinrichtung nach einem der vorhergehenden Ansprüche, **dadurch gekennzeichnet, dass** zwei mechanisch miteinander gekoppelte Stellscheibe (19a, 19b) vorgesehen sind, von denen eine erste Stellscheibe (19a) dem ersten Kupplungsteil (12) und eine zweite Stellscheibe (19b) dem zweiten Kupplungsteil (14) zugeordnet ist, wobei die beiden Stellscheiben (19a, 19b) gemeinsam zwischen ihrer jeweiligen Kupplungs-/Entkupplungsstellung (20) und ihrer Sicherungsstellung (21) bewegbar sind.

5. Kupplungseinrichtung nach einem der vorhergehenden Ansprüche, **dadurch gekennzeichnet, dass** die Ausnehmung (22) schlüssellochartig ausgebildet ist und der Vorsprung (29) korrespondierend hierzu einen schlüsselartigen Profilabschnitt (31) aufweist, an den sich in Aufsteckrichtung ein zylindrischer Drehabschnitt (30) anschließt, wobei sich die Ausnehmung (22) im zusammengesteckten Zustand von Stellscheibe (19; 19a) und Kupplungsteil (14) im Bereich des zylindrischen Drehabschnitts (30) befindet.

6. Kupplungseinrichtung nach einem der vorhergehenden Ansprüche, **dadurch gekennzeichnet, dass** eine Drehbegrenzungseinrichtung zur Begrenzung der Drehbewegung der Stellscheibe (19; 19a, 19b) gegenüber den Kupplungsteilen (12, 14) und zur Vorgabe der Kupplungs-/Entkupplungsstellung (20) und der Sicherungsstellung (21) der Stellscheibe (19; 19a, 19b) vorgesehen ist.

7. Kupplungseinrichtung nach Anspruch 6, **dadurch gekennzeichnet, dass** die Drehbegrenzungseinrichtung wenigstens einen an der Stellscheibe (19; 19a, 19b) oder an einem der beiden Kupplungsteile (12, 14) ausgebildeten, langlochartigen Führungsschlitze (24) und wenigstens einen in den Führungsschlitz (24) eintauchenden, an einem der beiden Kupplungsteile (12, 14) oder an der Stellscheibe (19; 19a, 19b) ausgebildeten Führungsbolzen (34) aufweist, wobei die beiden Enden des Führungsschlitzes (24) als Anschläge für den Führungsbolzen (34) dienen.

8. Kupplungseinrichtung nach einem der vorhergehenden Ansprüche, **dadurch gekennzeichnet, dass** eine Verbindungseinrichtung zur Verbindung der Stellscheibe (19; 19a, 19b) mit dem ihr zugeordneten Kupplungsteil (12) vorgesehen ist.

9. Kupplungseinrichtung nach Anspruch 8, **dadurch gekennzeichnet, dass** die Verbindungseinrichtung eine an der Stellscheibe (19; 19a) ausgebildete zylindrische Verbindungshülse (27) und eine am Kupplungsteil (12) ausgebildete zylindrische Hülsenaufnahme (35) aufweist, in der die verbindungshülse (27) drehbar gelagert ist, wobei die Verbindungshülse (27) über Sicherungsmittel am Kupplungsteil (12) gesichert ist.

10. Kupplungseinrichtung nach Anspruch 9, **dadurch gekennzeichnet, dass** als Sicherungsmittel eine an der Verbindungshülse (27) vorgesehene Ringnut (28) und ein in die Ringnut (28) einlegbare Sicherungsring vorgesehen sind.

## Claims

1. Multiple coupling device for the creation of a releasable connection between generator-side fluid lines supplying a pressure medium and assigned to a fluidic pressure generator, and one or more actuator-side fluid lines assigned to a fluid actuator, with a first coupling part (12) which has several first fluid connections (13) for the generator-side fluid lines, and with a second coupling part (14) with several second fluid connections (15) for the actuator-side fluid lines, wherein during the coupling process in which they mutually approach one another in the direction of an installation axis (17), the two coupling parts (12, 14) may be brought into an operating position (18) in which a fluid passage is formed through the two coupling parts (12, 14), and in which the two coupling parts (12, 14) are secured against uncoupling by means of holding means (22, 29), wherein there is provided between the two coupling parts (12, 14) at least one manually operable adjusting disc (19; 19a, 19b) which is rotatable in an actuating plane running at right-angles to the installation axis (17) between a coupling/uncoupling position (20) allowing coupling or uncoupling of the two coupling parts (12, 14) and a locked position (21) assigned to the operating position (18) of the two coupling parts (12, 14) by means of a rotary movement with the installation axis (17) as axis of rotation, wherein during the rotary movement of the adjusting disc (19; 19a, 19b) into its coupling/uncoupling position (20) the fluid passage through the two coupling parts (12, 14) may be at least partly closed by means of the adjusting disc (19; 19a, 19b) and at the same time the two coupling parts (12, 14) may be non-detachably connected to one another before the coupling/uncoupling position of the adjusting disc (19; 19a, 19b) is reached, **characterised in that** there is provided as holding means a projection (29) aligned coaxially to the axis of rotation and formed on one of the coupling parts (12, 14) or on the adjusting disc (19; 19a) and a recess (22) formed on the adjusting disc (19, 19a) or on one of the coupling parts (12, 14), wherein projection (29) and recess (22) may be connected together in the coupling/uncoupling position (20) of the adjusting disc (19; 19a), while in another position of the adjusting disc (19; 19a) obtainable through rotary movement, a non-detachable connection between the two coupling parts (12, 14) is formed.

2. Coupling device according to claim 1, **characterised in that** the first and second fluid connections are formed on the first and second coupling part (12, 14) as fluid passages (13, 15) passing through the respective coupling part (12, 14), and that the adjusting disc (19; 19a, 19b) has through holes (23) which, in the locked position (21) of the adjusting disc (19; 19a, 19b), are so connected with the fluid passages (13, 15) that flow bridges between the first and second fluid passages (13, 15) are formed.

3. Coupling device according to claim 2, **characterised in that** the first and second fluid passages (13, 15) extend substantially parallel to the installation axis (17) between the top and bottom of the respective coupling part (12, 14), wherein in the locked position (21) of the adjusting disc (19; 19a, 19b) a particular first fluid passage (13) on the first coupling part (12) is substantially aligned with the assigned through hole (23) on the adjusting disc (19; 19a, 19b) and is substantially aligned with the assigned second fluid passage (15) on the second coupling part (14).

4. Coupling device according to any of the preceding claims, **characterised in that** two physically connected adjusting discs (19a, 19b) are provided, with a first adjusting disc (19a) assigned to the first coupling part (12) and a second adjusting disc (19b) assigned to the second coupling part (14), wherein the two adjusting discs (19a, 19b) may be moved together between their respective coupling/uncoupling position (20) and their locked position (21).

5. Coupling device according to any of the preceding claims, **characterised in that** the recess (22) is like a keyhole and, corresponding to this, the projection (29) has a key-like profile section (31), followed in the direction of insertion by a cylindrical turning section (30) wherein, when the adjusting disc (19; 19a) and coupling part (14) are fitted together, the recess (22) is located in the area of the cylindrical turning section (30).

6. Coupling device according to any of the preceding claims, **characterised in that** a rotation limiting device is provided to limit the rotary movement of the adjusting disc (19; 19a, 19b) relative to the coupling parts (12, 14), and to preset the coupling/uncoupling position (20) and the locked position (21) of the adjusting disc (19; 19a, 19b).

7. Coupling device according to claim 6, **characterised in that** the rotation limiting device has at least one oblong guide slot (24) formed in the adjusting disc (19; 19a, 19b) or in one of the two coupling parts (12, 14), and at least one guide pin (34) dipping into the guide slot (24) and formed on one of the two coupling parts (12, 14) or in the adjusting disc (19; 19a, 19b), wherein the two ends of the guide slot (24) serve as stops for the guide pin (34).

8. Coupling device according to any of the preceding claims, **characterised in that** a connection device is provided to connect the adjusting disc (19; 19a, 19b) to its assigned coupling part (12).

9. Coupling device according to claim 8, **characterised in that** the connection device has a cylindrical connection sleeve (27) formed on the adjusting disc (19; 19a), and a cylindrical sleeve location (35) formed on the coupling part (12), in which the connection sleeve (27) is rotatably mounted, wherein the connection sleeve (27) is secured by locating means to the coupling part (12).

10. Coupling device according to claim 9, **characterised in that** an annular slot (28) made in the connection sleeve (27) and a locking ring insertable in the annular slot (28) are provided as locating means.

## Revendications

1. Dispositif de raccordement à raccords multiples pour la réalisation d'un assemblage amovible entre des conduites de fluide du côté générateur guidant un fluide sous pression et associées à un générateur de fluide et des conduites de fluide du côté consommateur associées à au moins un consommateur, comportant une première pièce de raccordement (12) qui est munie de plusieurs premiers raccords de fluide (13) pour les conduites de fluide du côté générateur, et comportant une deuxième pièce de raccordement (14) qui est munie de plusieurs deuxièmes raccords de fluide (15) pour les conduites de fluide du côté consommateur, les deux pièces de raccordement (12, 14) pouvant être amenées, au cours du processus de raccordement, sous l'effet d'un rapprochement mutuel de l'une vers l'autre dans la direction d'un axe d'installation (17), dans une position de travail (18), dans laquelle il se produit un passage de fluide à travers les deux pièces de raccordement (12, 14), et dans laquelle les deux pièces de raccordement (12, 14) sont bloquées par des moyens de retenue (22, 29) empêchant une désolidarisation, (12, 14), au moins un disque de réglage (19 ; 19a, 19b) étant prévu entre les deux pièces de raccordement, qui peut être actionné manuellement et qui, par un mouvement de rotation autour de l'axe d'installation (17) formant un axe de rotation, peut tourner dans un plan d'actionnement transversal à l'axe d'installation (17) entre une position de couplage ou découplage (20) permettant respectivement un couplage ou un découplage des deux pièces de raccordement (12, 14), et une position de blocage (21) associée à la position de travail (18) des deux pièces de raccordement (12, 14), le passage du fluide à travers les deux pièces de raccordement (12, 14) pouvant être obturé au moins partiellement par le disque de réglage (19 ; 19a, 19b) pendant le mouvement de rotation du disque de réglage (19 ; 19a, 19b) vers sa position de couplage ou découplage (20) et en même temps les deux pièces de raccordement (12, 14) sont reliées de manière inamovible entre elles avant que le disque de réglage (19 ; 19a, 19b) ait atteint la position de couplage ou découplage, **caractérisé en ce que** les moyens de retenue sont formés par une saillie (29), réalisée sur une des pièces de raccordement (12, 14) ou sur le disque de réglage (19 ; 19a) et orientée coaxialement à l'axe de rotation, et un évidement (22) réalisé sur le disque de réglage (19 ; 19a) ou sur une des pièces de raccordement (12, 14), la saillie (29) et l'évidement (22) pouvant être enfichées l'un dans l'autre dans la position de couplage ou découplage (20) du disque de réglage (19 ; 19a), alors qu'un assemblage inamovible se forme entre les deux pièces de raccordement (12, 14) lorsque le disque de réglage (19 ; 19a) est dans une autre position pouvant être atteinte par un mouvement de rotation du disque de réglage (19 ; 19a).

2. Dispositif de raccordement selon la revendication 1, **caractérisé en ce que** les premiers et deuxièmes raccords de fluide sur la première et la deuxième pièce de raccordement (12, 14) sont réalisés sous la forme de conduits de fluide (13, 15) traversant la pièce de raccordement (12, 14) concernée, et **en ce que** le disque de réglage (19 ; 19a, 19b) comporte des orifices de passage (23) qui, dans la position de blocage (21) du disque de réglage (19 ; 19a, 19b), communiquent avec les conduits de fluide (13, 15) de telle sorte qu'il se forme des ponts d'écoulement entre les premiers et les deuxièmes conduits de fluide (13, 15).

3. Dispositif de raccordement selon la revendication 2, **caractérisé en ce que** les premiers et deuxièmes conduits de fluide (13, 15) s'étendent sensiblement parallèlement à l'axe d'installation (17) entre la face supérieure et la face inférieure de la pièce de raccordement (12, 14) concernée, sachant que, dans la position de blocage (21) du disque de réglage (19 ; 19a, 19b), un premier conduit de fluide (13) respectif sur la première pièce de raccordement (12) est disposé sensiblement en alignement avec l'orifice de passage (23) associé sur le disque de réglage (19 ; 19a, 19b) et sensiblement en alignement avec le deuxième conduit de fluide (15) associé sur la deuxième pièce de raccordement (14).

4. Dispositif de raccordement selon l'une quelconque des revendications précédentes, **caractérisé en ce qu'**il est prévu deux disques de réglage (19a, 19b), couplés mécaniquement l'un à l'autre, parmi lesquels un premier disque de réglage (19a) est associé à la première pièce de raccordement (12) et un deuxième disque de réglage (19b) est associé à la deuxième pièce de raccordement (14), les deux disques de réglage (19a, 19b) pouvant être déplacés conjointement entre leur position de couplage ou découplage (20) respective et leur position de blocage (21).

5. Dispositif de raccordement selon l'une quelconque des revendications précédentes, **caractérisé en ce que** l'évidement (22) est réalisé en forme de trou de serrure, et la saillie (29) possède une partie de profil (31) en forme de clé, qui correspond à celui-ci et qui se prolonge dans le sens d'enfichage par une partie rotative (30) cylindrique, l'évidement (22) étant situé dans la zone de la partie rotative (30) cylindrique lorsque le disque de réglage (19 ; 19a) et la pièce de raccordement (14) sont en position enfichée.

6. Dispositif de raccordement selon l'une quelconque des revendications précédentes, **caractérisé en ce qu'**il est prévu un dispositif destiné à limiter le mouvement de rotation du disque de réglage (19 ; 19a, 19b) par rapport aux pièces de raccordement (12, 14) et pour définir la position de couplage ou découplage (20) et la position de blocage (21) du disque de réglage (19 ; 19a, 19b).

7. Dispositif de raccordement selon la revendication 6, **caractérisé en ce que** le dispositif de limitation de rotation comporte au moins une fente de guidage (24) en forme de trou oblong, réalisée sur le disque de réglage (19 ; 19a, 19b) ou sur une des deux pièces de raccordement (12, 14), et au moins un boulon de guidage (34), s'engageant dans la fente de guidage (24) et réalisé sur une des deux pièces de raccordement (12, 14) ou sur le disque de réglage (19 ; 19a, 19b), les deux extrémités de la fente de guidage (24) faisant fonction de butée pour le boulon de guidage (34).

8. Dispositif de raccordement selon l'une quelconque des revendications précédentes, **caractérisé en ce qu'**il est prévu un dispositif de liaison pour relier le disque de réglage (19 ; 19a, 19b) à la pièce de raccordement (12) qui lui est associée.

9. Dispositif de raccordement selon la revendication 8, **caractérisé en ce que** le dispositif de liaison comporte une douille (27) cylindrique, réalisée sur le disque de réglage (19 ; 19a), et un logement (35) cylindrique, réalisé sur la pièce de raccordement (12), dans lequel la douille (27) peut être logée de manière rotative, la douille (27) étant bloquée sur la pièce de raccordement (12) par des moyens de blocage.

10. Dispositif de raccordement selon la revendication 9, **caractérisé en ce que** les moyens de blocage sont formés par une rainure annulaire (28), prévue sur la douille (27), et une bague de blocage, pouvant être posée dans la rainure annulaire (28).
